# EUROPEAN PATENT SPECIFICATION

(11) **EP 2 786 822 B1**
(45) Date of publication and mention of the grant of the patent: **09.03.2016**
(21) Application number: 14161769.6
(22) Date of filing: 26.03.2014
(51) Int. Cl.: B23B 31/08

(54) **Chuck for securing a tool with independent lubricating means**
Futter zum Befestigen eines Werkzeugs mit unabhängigen Schmiermitteln
Mandrin de serrage pour fixer un outil avec des moyens de lubrification indépendants

(30) Priority: 02.04.2013 IT TO20130266
(43) Date of publication of application: 08.10.2014
(73) Proprietor: S.C.M. S.r.l., 15020 Murisengo (Alessandria) (IT)
(72) Inventor: Masoero, Maurizio, 15020 Murisengo (Alessandria) (IT)
(74) Representative: Gerbino, Angelo

(56) References cited:
- EP-A1- 2 428 298
- US-A1- 2002 053 771

## Description

The present invention relates to a chuck for securing a tool, for machining operations such as tapping, drilling and the like.

In particular, such a chuck comprises:
- a body having a through cavity extending longitudinally along an axis, and
- a bush for securing the tool, which is associated with a distal end of the body.

According to a prior art, said longitudinal cavity is placed in communication both with a source of compressed air and with a reservoir on the frame of the machine tool containing a mixture of water and lubricating oil. During machining, air and the water/oil mixture flow out, not at the same time, continously through the cavity and reach the tool, ensuring adequate lubrication. Document EP 2 428 298 A1 shows a chuck according to the preamble of claim 1.

However, such a system is very rigid and inflexible, as it depends on a reservoir which is integral with the machine tool and which is typically filled with a standard lubricant mixture having a fairly low oil content of about 8%.

To overcome the above-captioned drawback, the subject matter of the present invention is therefore a chuck according to claim 1.

In operation, some of the compressed air blown into the cavity enters the first sub-chamber, pushing the piston, which slides, causing lubricating oil contained in the second sub-chamber to flow into the hollow space in the cartridge, where it is mixed with the remaining part of the compressed air blown into the cavity. This forms an air/oil mixture that flows through a longitudinal through bore of the tool, ensuring lubrication.

Since the lubricating oil is contained in a chamber associated with the chuck - which is therefore small and wholly independent of the machine tool - said oil can be completely replaced at the beginning of each new job, with the advantage of being able to use the oil most suitable for the specific tool used each time.

The air/oil mixture that is formed in the cartridge typically has a very low oil content, of the order of 1% by volume, with the additional advantage that the amount of spent oil that has to be disposed of is smaller, and it also does not have to be first separated from the mixing water, as was necessary in the prior art.

Further advantages and features of the present invention will become apparent from the detailed description which follows, provided by way of non-limiting example with reference to the accompanying drawings, in which:

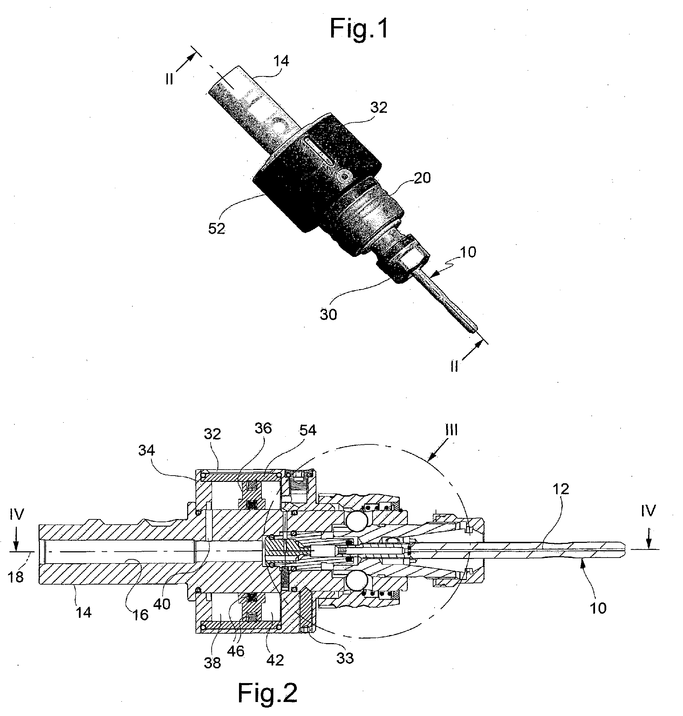

Figure 1 is a perspective view of a chuck of the invention holding a tool,
Figure 2 is a sectional view along the line II-II of Figure 1,

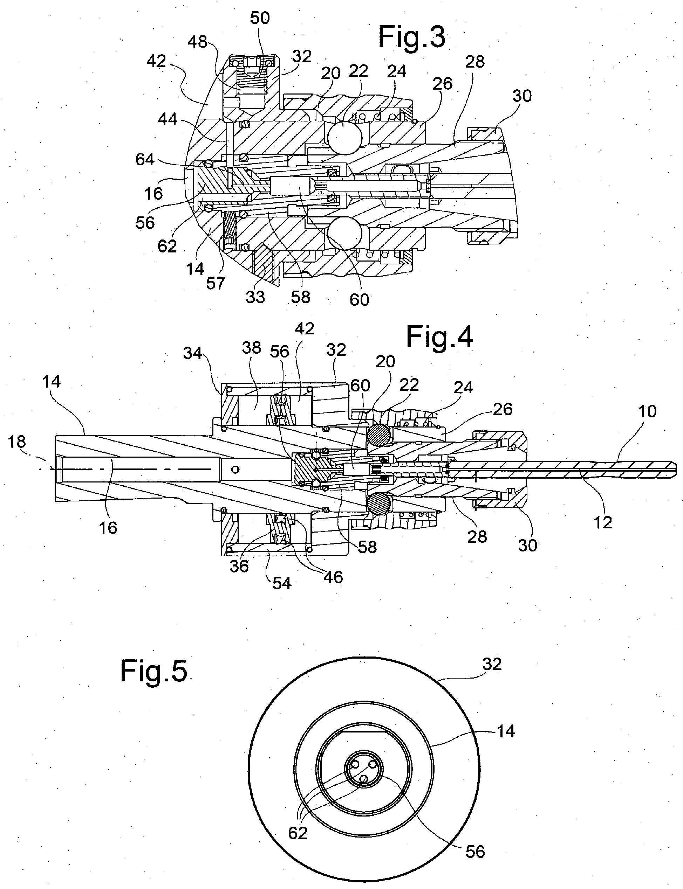

Figure 3 is an enlarged view of part of Figure 2,
Figure 4 is a sectional view along the line IV-IV of Figure 2, and
Figure 5 is a view in elevation of the rear of the chuck of the above figures.

A chuck for securing a tool 10 with an axial through bore 12 comprises an axisymmetric oblong body 14 having a through cavity 16 extending longitudinally along the central axis 18, and a bush for securing the tool 10, which is associated, conventionally, with the distal end of the body 14. In a manner which is known per se and which is therefore not described in further detail, the components of said bush include a sleeve 20, a row of ball bearings 22, a spring 24, an elastic ring 26, a clamp 28 and a nut 30.

An annular chamber, defined by a bell-shaped element 32 and by a flange 34 which closes off the mouth of the latter, extends circumferentially around a mid-portion of the side surface of the body 14. The element 32 is removably attached to the body 14 by grub screws 33 screwed into respective radial through holes which extend in the radial wall of the element 32. The chamber is divided by a sliding piston 36 into a first sub-chamber 38 communicating through a first radial channel 40 with the cavity 16 and into a second sub-chamber 42, from which a second radial channel 44 departs. The channels 40, 44 are formed through the body 14. The piston 36 is made in the form of ring with respective seals 46 on the outer and inner circumferential walls.

The second sub-chamber 42 contains lubricating oil and has a supply inlet 48, which is open towards the outside and is closed by a screw cap 50. The oil level can be monitored as the bell-shaped element 32 has, on the axial wall thereof, a longitudinal slot 52 and encloses a sleeve of transparent material 54, which may thus serve as a level gauge.

A cartridge is arranged in the distal portion of the cavity 16, said cartridge being formed by a first and a second element 56, 58 which are secured to one another, in particular by means of a bayonet fitting. The outer element 58 is retained in the cavity 16 of the body 14 by a radial grub screw 57.

The elements 56, 58 that form the cartridge define a hollow space 60, a plurality of first circumferentially spaced out conduits 62 which put the hollow space 60 in communication with the axial cavity 16, and a second conduit 64 communicating with the second radial channel 44, leading into said hollow space 60. The second conduit 64 has an end portion that lies along the central axis 18, while the first conduits 62 lie on a cylindrical surface which is coaxial to the axis 18. The hollow space 60 is open towards the distal end of the cartridge, in such a way that it is in communication with the bore 12 of the tool 10.

In operation, when the chuck is mounted on a machine tool, compressed air is blown into the longitudinal cavity 16. Some of this air flows into the first radial channel 40, before entering the first sub-chamber 38, causing the piston 36 to slide, which in turn pushes the lubricating oil contained in the second sub-chamber 42 into the second radial channel 44, from which the oil flows into the second conduit 64 and from here into the hollow space 60 of the cartridge. At the same time, the part of the compressed air blown into the cavity 16 which does not flow into the first radial channel 40 enters the first circumferentially spaced out conduits 62 of the cartridge, before flowing into the hollow space 60. An air/oil mixture - typically having an oil content of about 1% by volume - is thus formed in the hollow space, said mixture then flowing through the axial through bore 12 of the tool 10, ensuring lubrication.

Advantageously, the cartridge is made in the form of an interchangeable module, so that the module which - by virtue of the configuration and size of the respective conduits 62, 64 and hollow space 60 for mixing - best meets the specific requirements for the outstanding application can be used each time. Alternatively, it is possible to provide flow regulation means, such as valves, discs or the like, in order to control as desired the flow rate of oil flowing through a same cartridge.

Typically, the oil is not mixed with other types of liquids - in particular water - thus facilitating and simplifying recovery and disposal of the oil at the end of the work cycle.

Naturally, without prejudice to the principle of the invention, the structural details and embodiments may vary widely with respect to those described herein purely by way of example, without thereby exceeding the scope of the invention as claimed.

## Claims

1. A chuck for securing a tool (10), comprising:
- a body (14) having a through cavity (16) extending longitudinally along an axis (18), and
- a bush for securing said tool (10), which is associated with a distal end of said body (14),
- a chamber arranged externally to said body (14),
- a cartridge (56, 58) arranged within a distal portion of said cavity (16), and within which a hollow space (60) open towards the distal end of the cartridge is defined, at least one first conduit (62) communicating with said cavity (16), and said chuck being **characterized in that**,
the chamber is divided by a sliding piston (36) into a first sub-chamber (38) communicating through a first radial channel (40) with said cavity (16) and into a second sub-chamber (42), from which a second radial channel (44) departs, and the cartridge (56, 58) has a second conduit (64) communicating with said second radial channel (44), leading into said hollow space (60).

2. A chuck according to Claim 1, wherein said chamber extends circumferentially around the side surface of the body (14) and is defined by a bell-shaped element (32) and by a flange (34) closing the mouth of said element (32).

3. A chuck according to Claim 1 or 2, comprising means for indicating the level of the oil which is present in the second sub-chamber (42).

4. A chuck according to Claim 2 and 3, wherein said bell-shaped element (32) has a longitudinal slot (52) and encloses a sleeve (54) of transparent material.

5. A chuck according to any preceding claim, wherein said cartridge is formed by a first and a second element (56, 58) and has a plurality of first circumferentially spaced out conduits (62) which put the hollow space (60) in communication with the cavity (16).

6. A chuck according to Claim 5, wherein said first conduits (62) are circumferentially arranged about an end portion of the second conduit (64) lying along said axis (18).

7. A chuck according to any preceding claim, wherein said cartridge is made in the form of an interchangeable module.

8. Use of a chuck according to any preceding claim to secure a tool (10) which is lubricated by oil coming from said second sub-chamber (42).

## Patentansprüche

1. Spannfutter für das Fixieren eines Werkzeugs (10), mit:
einem Körper (14), der ein Durchgangsloch (16) hat, das sich längs einer Achse (18) erstreckt, und
einer Buchse zum Fixieren des Werkzeugs (10), die einem fernen Ende des Körpers (14) zugeordnet ist,
einer Kammer, die außerhalb des Körpers (14) angeordnet ist,
einem Einsatz (56, 58), der innerhalb eines fernen Abschnitts des Durchgangsloch (16) angeordnet ist, innerhalb dem ein sich in Richtung des fernen Endes des Einsatz öffnender Hohlraum (60) begrenzt ist, wobei mindestens ein erster Kanal (62) mit dem Durchgangsloch (16) in Verbindung ist, und
wobei das Spannfutter **dadurch gekennzeichnet ist, dass**
die Kammer durch einen Gleitkolben (36) in eine erste Unterkammer (38), die durch einen ersten radialen Kanal (40) mit dem Durchgangsloch (16) verbunden ist, und in eine zweite Unterkammer (42) unterteilt ist, von der ein zweiter radialer Kanal (44) abgeht, und
der Einsatz (56, 58) einen zweiten Kanal (64) hat, der mit dem zweiten radialen Kanal (44) verbunden ist und in den Hohlraum (60) führt.

2. Spannfutter nach Anspruch 1, wobei sich die Kammer in Umfangsrichtung um die Seitenfläche des Körpers (14) erstreckt und durch ein glockenförmiges Element (32) und durch einen Flansch (34), der die Öffnung des Elements (32) schließt, begrenzt ist.

3. Spannfutter nach Anspruch 1 oder 2, mit einer Einrichtung für das Anzeigen des Ölstands, der in der zweiten Unterkammer (42) vorliegt.

4. Spannfutter nach Anspruch 2 und 3, wobei das glockenförmige Element (32) eine Längsnut (52) hat und eine Hülse (54) aus transparentem Material umschließt.

5. Spannfutter nach einem der vorstehenden Ansprüche, wobei der Einsatz durch ein erstes und ein zweites Element (56, 58) ausgebildet ist und eine Vielzahl von ersten in Umfangsrichtung verteilten Kanälen (62) hat, die den Hohlraum (60) mit dem Durchgangsloch (16) verbinden.

6. Spannfutter nach Anspruch 5, wobei die ersten Kanäle (62) in Umfangsrichtung um einen Endabschnitt des zweiten Kanals (64), der entlang der Achse (18) liegt, angeordnet sind.

7. Spannfutter nach einem der vorstehenden Ansprüche, wobei der Einsatz in der Form eines austauschbaren Moduls gemacht ist.

8. Verwendung eines Spannfutters nach einem der vorstehenden Ansprüche, um ein Werkzeug (10) zu fixieren, das durch Öl geschmiert wird, das aus der zweiten Unterkammer (42) kommt.

## Revendications

1. Mandrin de serrage pour la fixation d'un outil (10) comprenant :
- un corps (14) présentant une cavité débouchante (16) s'étendant longitudinalement le long d'un axe (18) et
- une douille pour la fixation dudit outil (10), qui est associée à une extrémité distale dudit corps (14),
- une chambre agencée à l'extérieur dudit corps (14),
- une cartouche (56, 58) agencée dans une partie distale de ladite cavité (16) et dans laquelle un espace creux (60) ouvert vers l'extrémité distale de la cartouche est défini, au moins un premier conduit (62) communiquant avec ladite cavité (16) et
ledit mandrin de serrage étant **caractérisé en ce que** la chambre est divisée par un piston coulissant (36) en une première sous-chambre (38) communiquant par un premier canal radial (40) avec ladite cavité (16) et en une seconde sous-chambre (42), de laquelle un second canal radial (44) part, et la cartouche (56, 58) présente un second conduit (64) communiquant avec ledit second canal radial (44) menant dans ledit espace creux (60).

2. Mandrin de serrage selon la revendication 1, dans lequel ladite chambre s'étend sur la circonférence autour de la surface latérale du corps (14) et est définie par un élément en forme de cloche (32) et par une bride (34) fermant la bouche dudit élément (32).

3. Mandrin de serrage selon la revendication 1 ou 2, comprenant des moyens pour indiquer le niveau de l'huile qui est présente dans la seconde sous-chambre (42).

4. Mandrin de serrage selon les revendications 2 et 3, dans lequel ledit élément en forme de cloche (32) présente une fente longitudinale (52) et renferme un manchon (54) de matériau transparent.

5. Mandrin de serrage selon l'une quelconque des revendications précédentes, dans lequel ladite cartouche est formée par un premier et un second élément (56, 58) et présente une pluralité de premiers conduits (62) espacés sur la circonférence qui placent l'espace creux (60) en communication avec la cavité (16).

6. Mandrin de serrage selon la revendication 5, dans lequel lesdits premiers conduits (62) sont agencés sur la circonférence autour d'une partie d'extrémité du second conduit (64) se trouvant le long dudit axe (18).

7. Mandrin de serrage selon l'une quelconque des revendications précédentes, dans lequel ladite cartouche est réalisée sous la forme d'un module interchangeable.

8. Utilisation d'un mandrin de serrage selon l'une quelconque des revendications précédentes, pour la fixation d'un outil (10) qui est lubrifié par de l'huile venant de ladite seconde sous-chambre (42).
